# FASCICULE DE BREVET EUROPEEN

(11) **EP 3 311 461 B1**
(45) Date de publication et mention de la délivrance du brevet: **26.01.2022**
(21) Numéro de dépôt: 16729867.8
(22) Date de dépôt: 10.06.2016
(51) Int. Cl.: H02J 7/00, H02J 7/34, H01M 10/44

(54) **DISPOSITIF DE CHARGE NOMADE ET PROCÉDÉ DE GESTION DE LA CHARGE INTERNE DUDIT DISPOSITIF**
NOMADISCHE LADEVORRICHTUNG UND VERFAHREN ZUR VERWALTUNG DER INTERNEN LADUNG DER VORRICHTUNG
NOMADIC CHARGING DEVICE AND METHOD FOR MANAGING THE INTERNAL CHARGE OF SAID DEVICE

(30) Priorité: 16.06.2015 FR 1555463
(43) Date de publication de la demande: 25.04.2018
(73) Titulaire: Commissariat à l'Énergie Atomique et aux Énergies Alternatives, 75015 Paris (FR)
(72) Inventeur: DELAILLE, Arnaud, 73000 Bassens (FR); DELAILLE, Benjamin, 13008 Marseille (FR); HING, Sothun Eric, 73000 Chambéry (FR); TESSARD, Romain, 73100 Aix-les-Bains (FR)
(74) Mandataire: Novaimo
(86) Numéro de dépôt international: PCT/EP2016/063289
(87) Numéro de publication internationale: WO 2016/202693

(56) Documents cités:
- CA-A1- 2 381 035
- US-A1- 2004 174 140
- US-A1- 2010 060 230
- US-A1- 2011 147 031
- US-A1- 2012 146 588
- US-A1- 2013 057 222
- US-B1- 6 473 630

## Description

L'invention concerne un dispositif de charge nomade destiné à recharger un appareil externe (téléphone mobile, tablette, ordinateur, appareil photo, etc...) et un procédé de gestion de la charge interne de ce dispositif.

Un dispositif de charge nomade, également appelé « power bank » (banque d'énergie), intègre une batterie ou accumulateur interne, une interface de connexion avec une source d'alimentation et une interface de connexion avec un appareil externe à recharger. En fonctionnement, un utilisateur recharge le dispositif de charge nomade en le connectant à une source d'alimentation externe, par exemple au secteur (ou réseau électrique), directement ou par l'intermédiaire d'un chargeur. Une fois la charge complète, l'utilisateur débranche le dispositif de charge nomade et dispose d'une réserve d'énergie électrique. Lorsque la batterie de son téléphone mobile (ou d'un autre appareil nomade) est déchargée, il connecte son téléphone au dispositif de charge nomade afin de le recharger.

La durée de vie de la batterie intégrée du dispositif de charge nomade, généralement une batterie lithium-ion, peut considérablement varier en fonction de ses conditions d'utilisation et des conditions dans lesquelles elle est laissée au repos. Le vieillissement de la batterie est notamment accéléré lorsque la batterie est laissée au repos avec un état de charge élevé, proche ou égal à 100%. Or, en raison de la fonction même du dispositif de charge nomade, sa batterie interne est susceptible d'être laissée au repos durant plusieurs heures, ce qui a pour effet d'accélérer son vieillissement et par conséquent de réduire sa durée de vie. Des exemples des dispositifs sont montrés dans US2004174140, CA2381035, US2012146588 et US2010060230.

A cet effet, l'invention concerne un dispositif de charge nomade tel que défini dans la revendication indépendante 1.

Ainsi, selon l'invention, les batteries internes sont chargées de façon optimale en fonction de leurs caractéristiques respectives de durée de vie et d'autonomie. Par exemple, le dispositif de charge nomade peut intégrer une première batterie de type énergie ayant une durée de vie limitée et une grande autonomie et une deuxième batterie de type puissance ayant une durée de vie plus grande et une autonomie limitée. La première batterie peut ainsi avoir une autonomie maximale au détriment d'une durée de vie non maximale, et la deuxième batterie peut au contraire avoir une durée de vie maximale au détriment d'une autonomie non maximale. Par défaut (c'est-à-dire sans instruction spécifique), la deuxième batterie à grande durée de vie est principalement chargée, la première batterie à durée de vie limitée étant peu chargée. Grâce à cela, on préserve la durée de vie de la première batterie. Ce n'est que sur commande ou instruction spécifique, que la première batterie est chargée davantage pour apporter une autonomie maximale à l'utilisateur, tout en préservant ainsi la durée de vie de son dispositif de stockage.

Dans une forme de réalisation particulière, dans le mode de charge interne renforcée, les états de charge respectifs des deux batteries internes sont augmentés par rapport aux états de charge correspondants du mode standard.

Ainsi, par défaut, en mode de charge standard, les deux batteries internes sont chargées de façon limitée, de sorte à préserver leurs durées de vie.

Avantageusement, dans le mode de charge standard, l'état de charge moyen des deux batteries est compris entre 40 et 60%.

Avantageusement encore, dans le mode de charge standard, l'état de charge de la première batterie est inférieur à 50%, notamment inférieur à 30%..

Avantageusement encore, dans le mode de charge renforcée, les états de charge des deux batteries internes sont supérieurs ou égaux à 80%, notamment supérieurs ou égaux à 90%.

Le dispositif peut comprendre un bouton de commande pour commander l'activation du mode de charge renforcée.

En variante, le module de gestion de la charge interne est agencé pour activer le mode de charge renforcée sur réception d'une commande provenant d'un appareil intégrant la batterie externe.

Dans une forme de réalisation, la deuxième interface de connexion est adaptée pour alimenter les batteries internes en énergie électrique provenant de la batterie externe. Dans ce cas, le dispositif de charge nomade peut être utilisé pour abaisser l'état de charge de la batterie externe, dans le but de réduire son vieillissement.

Dans une forme de réalisation, il intègre un bloc de charge interposé entre la première et la deuxième interface de connexion adapté pour charger la batterie externe à travers la deuxième interface de connexion avec de l'énergie électrique provenant directement de la première interface de connexion à la source d'alimentation externe, le dispositif faisant fonction de chargeur d'appareil. Dans ce cas, le dispositif de l'invention a une double fonction de chargeur électrique « classique », destiné à charger une batterie externe lorsqu'il est connecté à une source d'alimentation, et de chargeur nomade, ou « power bank », apte à charger une batterie externe lorsqu'il n'est pas connecté à une source d'alimentation.

Avantageusement, bloc de charge est adapté pour charger la batterie externe à travers la deuxième interface de connexion à la fois avec de l'énergie électrique provenant directement de la première interface de connexion à la source d'alimentation externe et avec de l'énergie électrique provenant de l'une au moins des deux batteries internes, dans un mode de charge accéléré.

Avantageusement encore, le bloc de charge est agencé pour charger en priorité la batterie externe par rapport aux batteries internes.

L'invention concerne aussi un procédé de gestion de la charge interne d'un dispositif de charge nomade tel que défini dans la revendication indépendante 12.

Le procédé comprend avantageusement tout ou partie des caractéristiques additionnelles suivantes :
- lors de la deuxième étape de charge, les états de charge respectifs des deux batteries internes sont augmentés par rapport aux états de charge correspondants du mode standard ;
- lors de la première étape de charge, les deux batteries sont chargées de sorte à atteindre un état de charge moyen compris entre 40 et 60% ;
- lors de la première étape de charge, la première batterie est chargée de sorte à atteindre un état de charge inférieur à 50%, notamment inférieur à 30% ;
- lors de la deuxième étape de charge, les batteries internes sont chargées de sorte à ce que leurs états de charge respectifs soient supérieurs ou égaux à 80%, notamment supérieurs ou égaux à 90%.

L'invention sera mieux comprise à l'aide de la description suivante d'un exemple particulier de réalisation du dispositif de charge nomade de l'invention, et d'un mode de réalisation particulier d'un procédé de gestion de la charge interne du dispositif, selon l'invention, en référence aux dessins annexés sur lesquels :

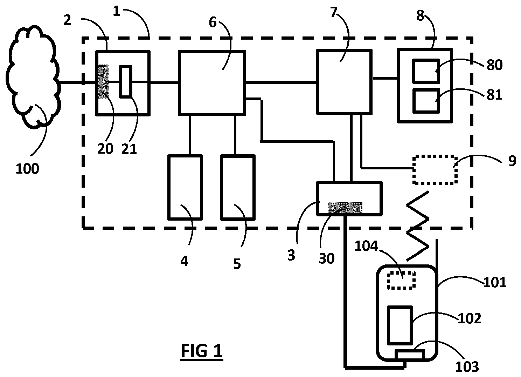

- la figure 1 représente un schéma bloc fonctionnel du dispositif de charge, selon un exemple de réalisation ;
- la figure 2 représente un organigramme du procédé de gestion, selon un mode de réalisation particulier.

L'invention concerne un dispositif de charge nomade 1 destiné à recharger une batterie externe, par exemple une batterie intégrée dans un appareil tel qu'un téléphone mobile, une tablette, un ordinateur, un appareil photo, etc.

Le dispositif de charge 1 comporte une première interface 2 de connexion à une source externe d'alimentation électrique 100, une deuxième interface 3 de connexion à une batterie externe à recharger 101, deux batteries internes 4, 5 de stockage d'énergie électrique, un bloc de charge 6, un module 7 de gestion de la charge interne et une interface utilisateur ou IHM (Interface Homme Machine) 8.

La première interface de connexion 2 comprend un connecteur 20 de connexion à une source d'alimentation électrique 100, par exemple au secteur (ou réseau électrique) et un composant, ou circuit électrique, d'interface 21. Le connecteur 20 comprend par exemple un port USB destiné à être relié au secteur par un câble USB. Le composant d'interface 21 est adapté pour recevoir la tension d'alimentation électrique (ici par le contact « Vbus » du port USB) délivrée par la source 100 et pour fournir en entrée du bloc de charge 6 une tension d'alimentation électrique continue, ici de 5V.

La deuxième interface de connexion 3 comprend un connecteur 30 de connexion à un appareil externe 101 intégrant une batterie 102 (dite « externe » du fait qu'elle est externe au dispositif de charge 1). L'interface 3 comporte par exemple un port USB dont le fil ou contact « Vbus » est connecté au bloc de charge 6 et destiné à être connecté à l'appareil externe 102 par liaison filaire (ici par un câble USB 103).

Les deux batteries internes 4, 5 sont connectées au bloc de charge 6. Elles sont destinées à stocker de l'énergie électrique reçue à travers la première interface de connexion 2 et à fournir de l'énergie électrique à l'appareil externe à recharger 101 à travers la deuxième interface de connexion 3. Le bloc de charge 6 est connecté aux interfaces de connexion 2 et 3 et aux deux batteries internes 4 et 5.

Les deux batteries 4, 5 sont ici des batteries au lithium, par exemple de technologie lithium-ion. Elles sont de types différents. Dans l'exemple décrit ici, la première batterie 4 est de type énergie (c'est-à-dire à forte énergie) : elle a de ce fait une grande autonomie et une durée de vie limitée, par exemple une densité d'énergie volumique supérieure à 600Wh/L et une durée de vie limitée à 300 cycles de pleines charges et décharges. La deuxième batterie 5 est de type puissance (c'est-à-dire à forte puissance) : elle a de ce fait une autonomie limitée et une durée de vie élevée, par exemple une densité d'énergie volumique inférieure à 500Wh/L et une durée de vie supérieure à 1000 cycles de pleines charges et décharges. Ainsi, la première batterie 4 a une autonomie supérieure et une durée de vie inférieure à celles de la deuxième batterie 5.

Le module 7 de gestion de la charge interne est destiné à gérer les états de charge respectifs des deux batteries internes 4 et 5. Il comprend un microcontrôleur 70 et un module logiciel 71 de contrôle de la charge des deux batteries internes 4 et 5, destiné à être exécuté par le microcontrôleur 70. Le microcontrôleur 70 est relié à l'interface de connexion 3, par une connexion data (c'est-à-dire une connexion de données). Le module de gestion 7 est agencé pour activer, par défaut, un mode de charge interne standard et, sur commande spécifique, un mode de charge interne renforcée.

Le mode de charge interne standard est défini par des états de charge respectifs SOC_{S1}, SOC_{S2} des deux batteries internes 4, 5 qui sont différents l'un de l'autre, l'état de charge SOC_{S1} de la première batterie 4 étant inférieur à celui SOC_{S2} de la deuxième batterie 5. Les états de charge SOC_{S1}, SOC_{S2} sont adaptés pour que l'état de charge moyen de deux batteries internes 4, 5 (c'est-à-dire la moyenne des états de charge SOC_{S1}, SOC_{S2}) soit compris entre 30% et 70%, notamment entre 40% et 60%. Par exemple, l'état de charge moyen des deux batteries internes 4, 5 est de l'ordre de 50%. En outre, les états de charge SOC_{S1}, SOC_{S2} sont adaptés de manière à préserver davantage celle des deux batteries 4, 5 qui a la durée de vie la plus faible, ici la première batterie 4. En mode de charge standard, l'état de charge de la première batterie (à plus faible durée de vie) est avantageusement inférieur à 50%, notamment inférieur à 30%, alors que l'état de charge de la deuxième batterie (à plus longue durée de vie) est avantageusement supérieur ou égal à 50%. En l'espèce, l'état de charge SOC_{S1} de la première batterie 4 (de durée de vie limitée) est ici de l'ordre de 25%, alors que l'état de charge SOC_{S2} de la deuxième batterie 5 (de longue durée de vie) est de l'ordre de 75%.

Le mode de charge interne renforcée est défini par des états de charge respectifs SOC_{R1}, SOC_{R2} des deux batteries internes 4, 5, qui sont en moyenne supérieurs à l'état de charge moyen du mode standard. Autrement dit, l'état de charge moyen des deux batteries 4, 5 en mode de charge renforcée est supérieur à l'état de charge moyen des deux batteries 4, 5 en mode de charge standard. Ce mode de charge renforcée est destiné à être activé, sur commande, en cas de besoin accru d'énergie, ou autrement dit d'autonomie. Dans l'exemple décrit ici, les états de charge SOC_{R1}, SOC_{R2} des batteries 4, 5 en mode de charge renforcée sont respectivement supérieurs aux états de charge correspondants SOC_{S1}, SOC_{S2} des deux batteries 4, 5 en mode standard. Dans le mode de charge renforcée, les états de charge SOC_{R1}, SOC_{R2} des deux batteries internes 4, 5 sont supérieurs ou égaux à 80%, notamment supérieurs ou égaux à 90%. Dans l'exemple de réalisation décrit ici, les états de charge SOC_{R1}, SOC_{R2} sont de 100%, ou légèrement inférieurs à 100%.

L'interface utilisateur ou IHM 8 comprend ici un élément de commande du mode de charge interne, par exemple un bouton 80, à deux positions par exemple « ON » et « OFF ». La position « ON » correspond à une commande d'activation de charge interne renforcée. La position « OFF » correspond à une commande de charge interne standard. L'interface IHM 8 comprend également ici des éléments indicateurs de l'état de charge interne du dispositif 1, par exemple un voyant 81 pouvant prendre différentes couleurs et/ou clignoter pour indiquer l'état du dispositif 1.

Le module 7 de gestion de la charge interne peut également être adapté pour recevoir une commande d'activation du mode de charge renforcée provenant de l'appareil externe 101. Dans ce cas, le dispositif de charge 1 et l'appareil externe 101 sont connectés l'un à l'autre par une liaison de données. La liaison de données peut être filaire ou radio. Dans le premier cas, elle utilise par exemple les fils de données de la connexion USB entre les connecteurs 30 et 103. Dans le deuxième cas, le dispositif de charge 1 comprend un module de communication radio 9, par exemple de type Bluetooth, adapté pour communiquer avec un module de communication radio correspondant 104 de l'appareil externe 101.

Dans le cas où le dispositif de charge 1 et l'appareil à recharge 101 sont reliés par une liaison de données (filaire ou radio), l'appareil 101 peut être doté d'une interface IHM apte à permettre la saisie et la restitution de données et/ou de commandes relatives à la charge interne du dispositif 1, en complément du bouton de commande 8.

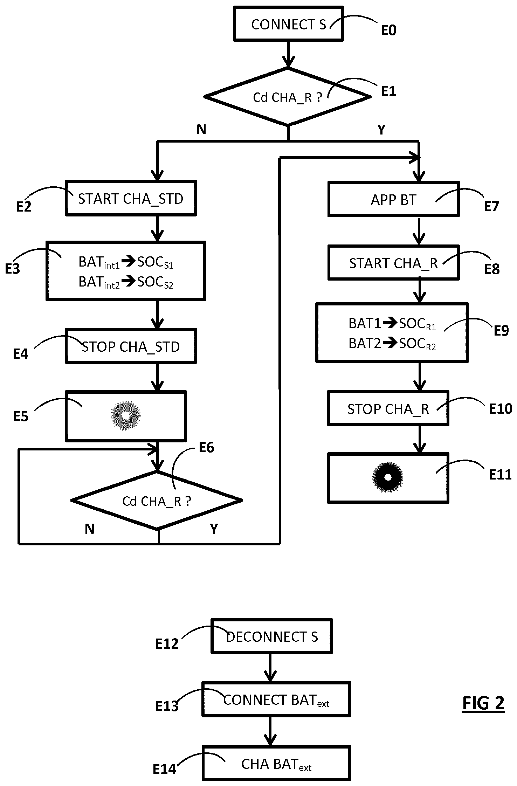

En référence à la figure 2, on va maintenant décrire le procédé de gestion de la charge interne du dispositif de charge nomade 1, correspondant au fonctionnement du dispositif 1, selon un exemple de mise en œuvre.

Supposons ici qu'initialement :
- les états de charge respectifs des batteries internes 4, 5 sont faibles, par exemple inférieurs ou égaux à 10% et
- le bouton de commande 80 est en position OFF (pas de commande spécifique pour une charge interne renforcée), ou une information analogue est fournie au module de gestion 7 par le module de communication radio 9 communiquant avec le module de communication radio correspondant 104 de l'appareil externe 101.

Le procédé comprend une première étape E0 de connexion du dispositif de charge 1 à une source d'alimentation 100, ici au réseau électrique. Cette étape E0 est réalisée par un utilisateur souhaitant recharger le dispositif de charge 1.

Après branchement E0 du dispositif de charge 1, le module de gestion 7 détermine l'état de charge ou SOC (de l'anglais « State Of Charge ») souhaité du dispositif de charge 1, à savoir soit un état de charge standard, soit un état de charge renforcée (ou augmentée ou « boostée »). A cet effet, le module de gestion 7 peut exécuter un test E1 de détection d'une commande d'activation du mode de charge renforcée.

Si aucune commande d'activation du mode de charge renforcée n'est détectée (bouton de commande 80 en position OFF ou information analogue en provenance du module de communication radio 9 communiquant avec le module de communication radio correspondant 104 de l'appareil externe 101), le test E3 est négatif comme représenté par la branche « N » sur la figure 2. Dans ce cas, le module de gestion 7 active par défaut le mode de charge interne standard lors d'une étape E2. Le procédé se poursuit par une première étape E3 de charge des deux batteries internes 4 et 5. Lors de cette étape E3, le bloc de charge 6 charge la première batterie 4 jusqu'à l'état de charge standard ou intermédiaire SOC_{S1} (égal ici à 25%) et la deuxième batterie 5 jusqu'à l'état de charge standard ou intermédiaire SOC_{S2} (égal ici à 75%), sous contrôle du module de gestion 7. La charge est réalisée avec de l'énergie électrique fournie par la source d'alimentation 100 à travers l'interface de connexion 2. La deuxième batterie 5 peut avantageusement être chargée en priorité, c'est-à-dire en premier, par rapport à la première batterie 4. Lorsque les batteries internes 4 et 5 ont atteint leurs états de charge respectifs standards ou intermédiaires SOC_{S1} et SOC_{S2}, le bloc de charge 6 interrompt leur charge, sous contrôle du module de gestion 7, lors d'une étape E4. Lors de la première étape de charge E3, les deux batteries 4, 5 sont chargées de sorte à atteindre un état de charge moyen (c'est-à-dire égal à la moyenne des états de charge respectifs des deux batteries) compris par exemple entre 40% et 60%, ici de l'ordre de 50%. La charge est interrompue alors que le dispositif de charge nomade 1 a globalement un état de charge ou SOC intermédiaire, ou standard, ici égal (en moyenne) à 50%. Le dispositif de charge nomade 1 demeure à cet état de charge intermédiaire (ici de 50%) tout en restant connecté à la source d'alimentation 100. Par ailleurs, une fois les états de charge SOC_{S1} et SOC_{S2} atteints, le voyant 81 indique que l'état de charge standard, ou intermédiaire, est atteint, lors d'une étape E5.

Le procédé passe ensuite ici à une nouvelle étape de test E6, analogue à l'étape de test E1, afin de détecter une éventuelle commande d'activation du mode de charge renforcée. Tant qu'il est négatif (branche « N » sur la figure 2), le test E6 est répété de façon itérative à une succession d'instants tᵢ, avec tᵢ=tᵢ₋₁+δt (δt étant par exemple de l'ordre de quelques centaines de millisecondes) afin de détecter une éventuelle commande d'activation d'une charge interne renforcée.

Lorsque l'utilisateur souhaite disposer d'une réserve énergétique plus importante, il actionne le bouton de commande 8 pour le faire passer en position ON, ou communique l'instruction de charge renforcée par communication radio 9, lors d'une étape E7, ce qui produit une commande d'activation du mode de charge interne renforcée. Le module de gestion 7 détecte la commande d'activation du mode de charge renforcée, lors d'une itération du test E6 (alors positif), comme représenté par la branche « Y » sur la figure 2. Il active (c'est-à-dire déclenche) alors le mode de charge interne renforcée lors d'une étape E8. L'étape E8 est suivie d'une deuxième étape E9 de charge des deux batteries internes 4 et 5. Lors de l'étape E9, le bloc de charge 6 charge la première batterie 4 jusqu'à l'état de charge SOC_{R1} (ici égal ou sensiblement égal à 100%) et la deuxième batterie 5 jusqu'à l'état de charge SOC_{R2} (ici égal ou sensiblement égal à 100%), sous contrôle du module de gestion 7. Lors de la deuxième étape de charge E9, les états de charge respectifs des deux batteries internes 4, 5 sont ici augmentés par rapport aux états de charge correspondants (SOC_{S1}, SOC_{S2}) du mode standard. Lorsque les batteries internes 4 et 5 ont atteint leurs états de charge SOC_{R1} et SOC_{R2} respectifs, le bloc de charge 6 interrompt la charge des batteries 4, 5, lors d'une étape E10. Une fois les états de charge SOC_{R1} et SOC_{R2} atteints, le voyant 81 indique alors que l'état de charge renforcée est atteint lors d'une étape de recharge E11.

Lors d'une étape E12, le dispositif de charge nomade 1 est déconnecté de la source d'alimentation 100. Cette étape E12 peut être exécutée à tout moment.

Si l'étape E12 est exécutée suite à la charge standard E2-E5, l'utilisateur dispose d'une réserve d'énergie intermédiaire ou standard, le dispositif de charge nomade 1 ayant ici un SOC de 50%.

Si l'étape E12 est exécutée suite à la charge renforcée E7-E11, l'utilisateur dispose d'une réserve d'énergie accrue, ici maximale, le dispositif de charge nomade 1 ayant un SOC de 100%.

Le dispositif de charge 1 peut ensuite être utilisé pour recharger la batterie externe 102 de l'appareil 101, en mode nomade (c'est-à-dire hors connexion à une source d'alimentation). A cet effet, l'appareil 101 est connecté par liaison filaire (ici USB) à la deuxième interface de connexion 3 du dispositif de charge 1, lors d'une étape E13. Le bloc de charge 6 charge ensuite la batterie externe 102, à travers l'interface de connexion 3 et avec l'énergie stockée dans les batteries internes 4, 5, lors d'une étape suivante E14. Lors de la charge de la batterie externe 102, la première batterie 4 ayant une durée de vie plus limitée n'est pas déchargée en priorité par rapport à la deuxième batterie 5.

Dans une variante de réalisation, le dispositif 1 a aussi une fonction de chargeur électrique de batterie externe. Autrement dit, le dispositif de charge nomade 1 est également un chargeur électrique classique destiné, lorsqu'il est connecté à la source d'alimentation 100, à charger une batterie externe avec de l'énergie électrique fournie par la source 100. Le chargeur électrique 1 intègre selon l'invention les deux batteries internes 4, 5 permettant de charger une batterie externe lorsqu'il n'est pas connecté à la source d'alimentation 100. Le bloc de charge 6 est donc adapté pour charger la batterie 102 de l'appareil externe 101 à travers les interfaces de connexion 3 et 103 avec de l'énergie électrique provenant directement de la première interface de connexion 2, lorsque le dispositif 1 est connecté par cette première interface 2 à la source d'alimentation externe 100. Lorsque l'appareil externe 101 est relié à la source d'alimentation 100 par l'intermédiaire du chargeur 1, la batterie 102 peut avantageusement être chargée en priorité par rapport aux batteries 4 et 5 internes du chargeur 1. Le bloc de charge, sous le contrôle du module de gestion 7, est avantageusement agencé pour charger en priorité la batterie externe 102 par rapport aux batteries internes 4, 5.

Dans une variante de réalisation, lorsque l'appareil externe 101 est relié à la source d'alimentation 100 par l'intermédiaire du chargeur 1, la batterie externe 102 peut être chargée dans un mode de charge accélérée ou « boost ». Dans ce mode de charge accélérée, la batterie 102 de l'appareil 101 est chargée à la fois avec de l'énergie électrique fournie par la source d'alimentation 100 et avec de l'énergie électrique fournie par l'une ou les deux batteries internes 4, 5. A cet effet, le bloc de charge 6 est adapté pour, sous le contrôle du module de gestion 7, charger la batterie externe 102 à travers la deuxième interface de connexion 3 à la fois avec de l'énergie électrique provenant directement de la première interface 2 de connexion à la source d'alimentation externe 100 et avec de l'énergie électrique provenant de l'une au moins des deux batteries internes 4, 5, dans un mode de charge accélérée.

Le dispositif de recharge nomade pourrait intégrer plus de deux batteries, pouvant avoir des durées de vie différentes. Dans ce cas, en mode de charge standard, la ou les batteries ayant des durées de vie inférieures sont moins chargées que la ou les batteries ayant des durées de vie supérieures. On peut par exemple envisager que la ou les batteries ayant une durée de vie inférieure à un seuil sont chargées, en mode standard, à un premier état de charge, alors que la ou les batteries ayant une durée de vie supérieure à ce seuil sont chargées avec un deuxième état de charge supérieur au premier.

Dans une autre variante de réalisation, l'une ou les deux batteries internes 4, 5 peuvent être chargées par l'intermédiaire de la deuxième interface de connexion 3 et du bloc de charge 6, avec de l'énergie électrique provenant de l'appareil externe 101, et notamment de la batterie externe 102.

Dans la description qui précède, les états de charge des deux batteries internes 4, 5 sont augmentés lorsque le dispositif de charge nomade 1 passe du mode de charge standard au mode de charge renforcée. En variante, seul l'état de charge de la batterie ayant la durée de vie la plus courte, ici la première batterie 4, pourrait être augmenté. Par exemple, la première batterie interne 4 et la deuxième batterie interne 5 pourraient être chargées respectivement à 30% (ou moins) et à 80% en mode de charge standard, et toutes les deux à 80% en mode de charge renforcée.

Les deux interfaces de connexion pourraient comprendre un même connecteur, par exemple un même connecteur USB, dans la mesure où la charge des batteries internes et la charge de la batterie externe sont asynchrones.

Dans la description qui précède du fonctionnement du dispositif de charge 1, on a supposé que les états de charge initiaux des batteries internes 4 et 5 étaient faibles et inférieurs aux états de charge finaux du mode standard. Si, avant l'étape de charge E3, l'état de charge de l'une des batteries 4 ou 5 est supérieur à l'état de charge cible SOC_{S1} ou SOC_{S2} du mode standard, cette batterie (4 ou 5) n'est pas chargée davantage lors de l'étape de charge E3. De façon analogue, si, avant l'étape de charge E9, l'état de charge de l'une des batteries 4, 5 est supérieur à l'état de charge cible SOC_{R1} ou SOC_{R2} du mode renforcé, cette batterie 4 ou 5 n'est pas chargée davantage lors de l'étape de charge E9. En variante, on pourrait dans ce cas décharger la batterie trop chargée vers l'autre batterie ou un autre dispositif.

Dans la description qui précède, les batteries internes 4, 5 du dispositif de charge 1 sont chargées par la source d'alimentation 100 par liaison filaire. En variante, la charge pourrait être réalisée de manière non filaire ou sans contact, par exemple par induction. De même, la charge de la batterie externe 102 par l'une ou les deux batteries internes 4, 5 du dispositif de charge 1 pourrait être réalisée de manière non filaire ou sans contact, par exemple par induction.

## Revendications

1. Dispositif de charge nomade comportant une première interface (2) de connexion à une source externe d'alimentation électrique (100), une deuxième interface (3) de connexion à une batterie externe (101) à recharger et au moins une première et une deuxième batteries internes (4, 5) de stockage d'énergie électrique destinées à stocker de l'énergie électrique reçue à travers la première interface de connexion et à fournir de l'énergie électrique à la batterie externe à recharger à travers la deuxième interface de connexion, **caractérisé en ce que** la première batterie interne (4) a une durée de vie inférieure à celle de la deuxième batterie interne (5) et **en ce que** le dispositif de charge comprend un module (7) de gestion de charge interne agencé pour :
- activer par défaut un mode de charge interne standard pour charger au moins les deux batteries internes défini par un premier état de charge (SOC_{S1}) de la première batterie interne (4) qui est inférieur à celui (SOC_{S2}) de la deuxième batterie interne (5), la première batterie interne étant chargée jusqu'au premier état de charge, et
- sur commande spécifique, activer un mode de charge interne renforcée pour charger au moins les deux batteries internes dans lequel l'état de charge (SOC_{R1}) de la première batterie (4) est augmenté par rapport au mode de charge interne standard.

2. Dispositif selon la revendication précédente, **caractérisé en ce que**, dans le mode de charge interne renforcée, les états de charge respectifs (SOC_{R1}, SOC_{R2}) des deux batteries internes sont augmentés par rapport aux états de charge correspondants (SOC_{S1}, SOC_{S2}) du mode de charge interne standard.

3. Dispositif selon l'une des revendications précédentes, **caractérisé en ce que**, dans le mode de charge interne standard, l'état de charge moyen des deux batteries (4, 5) est compris entre 40 et 60%.

4. Dispositif selon l'une des revendications précédentes, **caractérisé en ce que**, dans le mode de charge interne standard, l'état de charge de la première batterie interne (4) est inférieur à 50%, notamment inférieur à 30%.

5. Dispositif selon l'une des revendications précédentes, **caractérisé en ce que**, dans le mode de charge interne renforcée, les états de charge des deux batteries internes (4, 5) sont supérieurs ou égaux à 80%, notamment supérieurs ou égaux à 90%.

6. Dispositif selon l'une des revendications précédentes, **caractérisé en ce qu'**il comprend un bouton de commande (80) pour commander l'activation du mode de charge interne renforcée.

7. Dispositif selon l'une des revendications précédentes, **caractérisé en ce que** le module (7) de gestion de la charge interne est agencé pour activer le mode de charge interne renforcée sur réception d'une commande provenant d'un appareil (101) intégrant la batterie externe (102).

8. Dispositif selon l'une des revendications précédentes, **caractérisé en ce que** la deuxième interface de connexion (3) est adaptée pour alimenter les batteries internes (4, 5) en énergie électrique provenant de la batterie externe (102).

9. Dispositif selon l'une des revendications précédentes, **caractérisé en ce qu'**il intègre un bloc de charge (6) interposé entre la première et la deuxième interface de connexion (2, 3) adapté pour charger la batterie externe (102) à travers la deuxième interface de connexion (3) avec de l'énergie électrique provenant directement de la première interface (2) de connexion à la source d'alimentation externe (100), le dispositif faisant fonction de chargeur d'appareil.

10. Dispositif selon la revendication précédente, **caractérisé en ce que** le bloc de charge (6) est adapté pour charger la batterie externe (102) à travers la deuxième interface de connexion (3) à la fois avec de l'énergie électrique provenant directement de la première interface (2) de connexion à la source d'alimentation externe (100) et avec de l'énergie électrique provenant de l'une au moins des deux batteries internes (4, 5), dans un mode de charge accéléré.

11. Dispositif selon l'une des revendications 9 et 10, **caractérisé en ce que** le bloc de charge (6) est agencé pour charger en priorité la batterie externe (102) par rapport aux batteries internes (4, 5).

12. Procédé de gestion de la charge interne d'un dispositif de charge nomade comportant une première interface (2) de connexion à une source externe d'alimentation électrique (100), une deuxième interface (3) de connexion à une batterie externe (101) à recharger et deux batteries internes (4, 5) de stockage d'énergie électrique destinées à stocker de l'énergie électrique reçue à travers la première interface de connexion et à fournir de l'énergie électrique à la batterie externe à recharger à travers la deuxième interface de connexion, la première batterie interne (4) ayant une durée de vie inférieure à celle de la deuxième batterie interne (5), **caractérisé en ce qu'**il comprend :
- une première étape de charge (E3) lors de laquelle les deux batteries internes sont chargées selon un mode de charge interne standard défini par un premier état de charge (SOC_{S1}) de la première batterie (4) qui est inférieur à celui (SOC_{S2}) de la deuxième batterie (5), la première batterie étant chargée jusqu'au premier état de charge, et
- une deuxième étape de charge (E9) lors de laquelle les deux batteries internes sont chargées selon un mode de charge interne renforcée sur commande spécifique, dans lequel l'état de charge (SOC_{R1}) de la première batterie interne (4) est augmenté par rapport au mode de charge interne standard,
et **en ce que** la première étape de charge en mode standard est mise en œuvre par défaut et la deuxième étape de charge en mode renforcé est mise en œuvre sur commande spécifique.

13. Procédé selon la revendication 12, **caractérisé en ce que**, lors de la deuxième étape de charge, les états de charge respectifs (SOC_{R1}, SOC_{R2}) des deux batteries internes sont augmentés par rapport aux états de charge correspondants (SOC_{S1}, SOC_{S2}) du mode de charge interne standard.

14. Procédé selon l'une des revendications 12 et 13, **caractérisé en ce que**, lors de la première étape de charge, les deux batteries internes (4, 5) sont chargées de sorte à atteindre un état de charge moyen compris entre 40 et 60%.

15. Procédé selon l'une des revendications 12 à 14, **caractérisé en ce que**, lors de la première étape de charge, la première batterie interne (4) est chargée de sorte à atteindre un état de charge inférieur à 50%, notamment inférieur à 30%, et/ou **en ce que**, lors de la deuxième étape de charge, les deux batteries internes (4, 5) sont chargées de sorte à ce que leurs états de charge respectifs soient supérieurs ou égaux à 80%, notamment supérieurs ou égaux à 90%.

## Patentansprüche

1. Mobile Ladevorrichtung, umfassend eine erste Schnittstelle (2) zur Verbindung mit einer externen elektrischen Versorgungsquelle (100), eine zweite Schnittstelle (3) zur Verbindung mit einer wiederaufzuladenden externen Batterie (102) und mindestens eine erste und eine zweite interne Batterien zur Speicherung elektrischer Energie, die dazu bestimmt sind, über die erste Verbindungsschnittstelle empfangene elektrische Energie zu speichern und über die zweite Verbindungsschnittstelle elektrische Energie an die wiederaufzuladende externe Batterie abzugeben, **dadurch gekennzeichnet, dass** die erste interne Batterie (4) eine kürzere Lebensdauer als die zweite interne Batterie (5) aufweist, und dass die Ladevorrichtung ein Modul (7) zur Verwaltung der internen Ladung umfasst, wobei das Modul für Folgendes eingerichtet ist:
- defaultmäßiges Aktivieren eines standardmäßigen internen Lademodus zum Laden mindestens der zwei internen Batterien, der durch einen ersten Ladezustand (SOC_{S1}) der ersten internen Batterie (4), der kleiner als der (SOC_{S2}) der zweiten internen Batterie (5) ist, definiert ist, wobei die erste interne Batterie bis zu dem ersten Ladezustand geladen wird, und
- auf spezifischen Befehl, Aktivieren eines verstärkten internen Lademodus zum Laden mindestens der zwei internen Batterien, wobei der Ladezustand (SOC_{R1}) der ersten Batterie (4) verglichen mit dem standardmäßigen internen Lademodus erhöht wird.

2. Vorrichtung nach dem vorhergehenden Anspruch, **dadurch gekennzeichnet, dass** in dem verstärkten internen Lademodus die jeweiligen Ladezustände (SOC_{R1}, SOC_{R2}) der zwei internen Batterien verglichen mit den entsprechenden Ladezuständen (SOC_{S1}, SOC_{S2}) des standardmäßigen internen Lademodus erhöht werden.

3. Vorrichtung nach einem der vorhergehenden Ansprüche, **dadurch gekennzeichnet, dass** in dem standardmäßigen internen Lademodus der mittlere Ladezustand der zwei Batterien (4, 5) zwischen 40 und 60 % liegt.

4. Vorrichtung nach einem der vorhergehenden Ansprüche, **dadurch gekennzeichnet, dass** in dem standardmäßigen internen Lademodus der Ladezustand der ersten internen Batterie (4) kleiner als 50 %, insbesondere kleiner als 30 % ist.

5. Vorrichtung nach einem der vorhergehenden Ansprüche, **dadurch gekennzeichnet, dass** in dem verstärkten internen Lademodus die Ladezustände der zwei internen Batterien (4, 5) größer als oder gleich 80 %, insbesondere größer als oder gleich 90 % sind.

6. Vorrichtung nach einem der vorhergehenden Ansprüche, **dadurch gekennzeichnet, dass** sie eine Befehlstaste (80) beinhaltet, um die Aktivierung des verstärkten internen Lademodus zu befehligen.

7. Vorrichtung nach einem der vorhergehenden Ansprüche, **dadurch gekennzeichnet, dass** das Modul (7) zur Verwaltung der internen Ladung dazu eingerichtet ist, bei Empfang eines Befehls von einem Apparat (101), der die externe Batterie (102) umschließt, den verstärkten internen Lademodus zu aktivieren.

8. Vorrichtung nach einem der vorhergehenden Ansprüche, **dadurch gekennzeichnet, dass** die zweite Verbindungsschnittstelle (3) dazu angepasst ist, die internen Batterien (4, 5) mit elektrischer Energie zu versorgen, die von der externen Batterie (102) stammt.

9. Vorrichtung nach einem der vorhergehenden Ansprüche, **dadurch gekennzeichnet, dass** sie einen Ladeblock (6) umschließt, der zwischen der ersten und der zweiten Verbindungsschnittstelle (2, 3) eingefügt ist und dazu angepasst ist, die externe Batterie (102) über die zweite Verbindungsschnittstelle (3) mit elektrischer Energie zu laden, die direkt von der ersten Schnittstelle (2) zur Verbindung mit der externen Versorgungsquelle (100) stammt, wobei die Vorrichtung als Apparatladegerät dient.

10. Vorrichtung nach dem vorhergehenden Anspruch, **dadurch gekennzeichnet, dass** der Ladeblock (6) dazu angepasst ist, die externe Batterie (102) über die zweite Verbindungsschnittstelle (3) gleichzeitig mit elektrischer Energie, die direkt von der ersten Schnittstelle (2) zur Verbindung mit der externen Versorgungsquelle (100) stammt, und mit elektrischer Energie, die von mindestens einer der zwei internen Batterien (4, 5) stammt, in einem beschleunigten Lademodus zu laden.

11. Vorrichtung nach einem der Ansprüche 9 und 10, **dadurch gekennzeichnet, dass** der Ladeblock (6) dazu eingerichtet ist, die externe Batterie (102) verglichen mit den internen Batterien (4, 5) vorrangig zu laden.

12. Verfahren zur Verwaltung der internen Ladung einer mobilen Ladevorrichtung, umfassend eine erste Schnittstelle (2) zur Verbindung mit einer externen elektrischen Versorgungsquelle (100), eine zweite Schnittstelle (3) zur Verbindung mit einer wiederaufzuladenden externen Batterie (102) und zwei interne Batterien (4, 5) zur Speicherung elektrischer Energie, die dazu bestimmt sind, über die erste Verbindungsschnittstelle empfangene elektrische Energie zu speichern und über die zweite Verbindungsschnittstelle elektrische Energie an die wiederaufzuladende externe Batterie abzugeben, wobei die erste interne Batterie (4) eine kürzere Lebensdauer als die zweite interne Batterie (5) aufweist, **dadurch gekennzeichnet, dass** es Folgendes beinhaltet:
- einen ersten Ladeschritt (E3), während dessen die zwei internen Batterien gemäß einem standardmäßigen internen Lademodus geladen werden, der durch einen ersten Ladezustand (SOC_{S1}) der ersten Batterie (4), der kleiner als der (SOC_{S2}) der zweiten Batterie (5) ist, definiert ist, wobei die erste Batterie bis zu dem ersten Ladezustand geladen wird, und
- einen zweiten Ladeschritt (E9), während dessen die zwei internen Batterien auf spezifischen Befehl gemäß einem verstärkten internen Lademodus geladen werden, wobei der Ladezustand (SOC_{R1}) der ersten internen Batterie (4) verglichen mit dem standardmäßigen internen Lademodus erhöht wird,
und dass der erste Ladeschritt im standardmäßigen Modus defaultmäßig umgesetzt wird und der zweite Ladeschritt im verstärkten Modus auf spezifischen Befehl umgesetzt wird.

13. Verfahren nach Anspruch 12, **dadurch gekennzeichnet, dass** während des zweiten Ladeschritts die jeweiligen Ladezustände (SOC_{R1}, SOC_{R2}) der zwei internen Batterien verglichen mit den entsprechenden Ladezuständen (SOC_{S1}, SOC_{S2}) des standardmäßigen internen Lademodus erhöht werden.

14. Verfahren nach einem der Ansprüche 12 und 13, **dadurch gekennzeichnet, dass** während des ersten Ladeschritts die zwei internen Batterien (4, 5) so geladen werden, dass sie einen mittleren Ladezustand zwischen 40 und 60 % erreichen.

15. Verfahren nach einem der Ansprüche 12 bis 14, **dadurch gekennzeichnet, dass** während des ersten Ladeschritts die erste interne Batterie (4) so geladen wird, dass sie einen Ladezustand kleiner als 50 %, insbesondere kleiner als 30 % erreicht, und/oder dass während des zweiten Ladeschritts die zwei internen Batterien (4, 5) so geladen werden, dass ihre jeweiligen Ladezustände größer als oder gleich 80 %, insbesondere größer als oder gleich 90 % sind.

## Claims

1. Portable charging device including a first interface (2) for connection to an external electric power source (100), a second interface (3) for connection to an external battery (102) to be charged, and at least a first and a second internal electrical energy storage batteries, which are intended to store electrical energy received via the first connection interface and to supply electrical energy to the external battery to be charged via the second connection interface, **characterized in that** the first internal battery (4) has a lifetime shorter than that of the second internal battery (5), and **in that** the device comprises an internal charging management module (7), which is designed:
- to activate, by default, a standard internal charging mode for charging at least the two internal batteries, which is defined by a first state of charge (SOC_{S1}) of the first internal battery (4), which is lower than that (SOC_{S2}) of the second internal battery (5), the first internal battery being charged up to the first state of charge, and
- on a specific command, to activate an enhanced internal charging mode for charging at least the two internal batteries, in which the state of charge (SOC_{R1}) of the first battery (4) is increased relative to the standard internal charging mode.

2. Device according to the preceding claim, **characterized in that**, in the enhanced internal charging mode, the respective states of charge (SOC_{R1}, SOC_{R2}) of the two internal batteries are increased relative to the corresponding states of charge (SOCsi, SOC_{S2}) in the standard internal charging mode.

3. Device according to either of the preceding claims, **characterized in that**, in the standard internal charging mode, the average state of charge of the two batteries (4, 5) is between 40 and 60%.

4. Device according to one of the preceding claims, **characterized in that**, in the standard internal charging mode, the state of charge of the first internal battery (4) is lower than 50%, in particular lower than 30%.

5. Device according to one of the preceding claims, **characterized in that**, in the enhanced internal charging mode, the states of charge of the two internal batteries (4, 5) are higher than or equal to 80%, in particular higher than or equal to 90%.

6. Device according to one of the preceding claims, **characterized in that** it comprises a control button (80) for commanding the activation of the enhanced internal charging mode.

7. Device according to one of the preceding claims, **characterized in that** the internal charging management module (7) is designed to activate the enhanced internal charging mode on receiving a command from an appliance (101) that incorporates the external battery (102).

8. Device according to one of the preceding claims, **characterized in that** the second connection interface (3) is designed to supply the internal batteries (4, 5) with electrical energy from the external battery (102).

9. Device according to one of the preceding claims, **characterized in that** it incorporates a charging unit (6), which is interposed between the first and the second connection interface (2, 3) and is designed to charge the external battery (102) via the second connection interface (3) with electrical energy directly from the first interface (2) for connection to the external power source (100), the device acting as an appliance charger.

10. Device according to the preceding claim, **characterized in that** the charging unit (6) is designed to charge the external battery (102) via the second connection interface (3) both with electrical energy directly from the first interface (2) for connection to the external power source (100) and with electrical energy from at least one of the two internal batteries (4, 5) in a fast charging mode.

11. Device according to either of Claims 9 and 10, **characterized in that** the charging unit (6) is designed to charge the external battery (102) as a priority over the internal batteries (4, 5).

12. Method for managing the internal charging of a portable charging device including a first interface (2) for connection to an external electric power source (100), a second interface (3) for connection to an external battery (102) to be charged, and two internal electrical energy storage batteries (4, 5), which are intended to store electrical energy received via the first connection interface and to supply electrical energy to the external battery to be charged via the second connection interface, the first internal battery (4) having a lifetime shorter than that of the second internal battery (5), **characterized in that** said method comprises:
- a first charging step (E3), in which the two internal batteries are charged according to a standard internal charging mode defined by a first state of charge (SOC_{S1}) of the first battery (4), which is lower than that (SOC_{S2}) of the second battery (5), the first battery being charged up to the first state of charge, and
- a second charging step (E9), in which, on a specific command, the two internal batteries are charged according to an enhanced internal charging mode, in which the state of charge (SOC_{R1}) of the first internal battery (4) is increased relative to the standard internal charging mode,
and **in that** the first charging step in standard mode is implemented by default, and the second charging step in enhanced mode is implemented on a specific command.

13. Method according to Claim 12, **characterized in that**, in the second charging step, the respective states of charge (SOC_{R1}, SOC_{R2}) of the two internal batteries are increased relative to the corresponding states of charge (SOC_{S1}, SOC_{S2}) in the standard internal charging mode.

14. Method according to either of Claims 12 and 13, **characterized in that**, in the first charging step, the two internal batteries (4, 5) are charged so as to reach an average state of charge of between 40 and 60%.

15. Method according to one of Claims 12 to 14, **characterized in that**, in the first charging step, the first internal battery (4) is charged so as to reach a state of charge lower than 50%, in particular lower than 30%, and/or **in that**, in the second charging step, the two internal batteries (4, 5) are charged such that their respective states of charge are higher than or equal to 80%, in particular higher than or equal to 90%.
